# EUROPEAN PATENT APPLICATION

(11) **EP 4 750 041 A1**
(43) Date of publication of application: **27.05.2026**
(21) Application number: 25772692.7
(22) Date of filing: 09.01.2025
(51) Int. Cl.: H04M 1/02

(54) **ELECTRONIC DEVICE**

(30) Priority: 21.03.2024 CN 202410332543
(71) Applicant: HUAWEI TECHNOLOGIES CO., LTD., Shenzhen 518129 (CN)
(72) Inventor: YOU, Yulin, Shenzhen, Guangdong 518129 (CN); QIAN, Yungui, Shenzhen, Guangdong 518129 (CN); GU, Penghao, Shenzhen, Guangdong 518129 (CN); SHAN, Wei, Shenzhen, Guangdong 518129 (CN); WANG, Kaiqiang, Shenzhen, Guangdong 518129 (CN); CUI, Xianchao, Shenzhen, Guangdong 518129 (CN); LUO, Yufeng, Shenzhen, Guangdong 518129 (CN)
(74) Representative: Gill Jennings & Every LLP
(86) International application number: PCT/CN2025/071426
(87) International publication number: WO 2025/194982

(57) **Abstract**

This application provides an electronic device. The electronic device includes a first display, a conductive component, an elastic member, and a metal component. The conductive component and the elastic member are disposed between the first display and the metal component, the conductive component is electrically connected to the first display, and the elastic member is electrically connected to the metal component. The conductive component includes a connection part and an abutting part, and the connection part is connected to the first display. The elastic member includes a first end, a second end, and a deformation section located between the first end and the second end. The first end is connected to the metal component, and the second end abuts against the abutting part under an action of an elastic force generated by the deformation section, to electrically connect the elastic member and the conductive component. The foregoing technical solution can improve reliability of a screen and expand component layout space in the electronic device while reducing an overall device thickness.

## Description

This application claims priority to Chinese Patent Application No. 202410332543.7, filed with the China National Intellectual Property Administration on March 21, 2024 and entitled "ELECTRONIC DEVICE", which is incorporated herein by reference in its entirety.

### TECHNICAL FIELD

This application relates to the field of electronic device technologies, and more specifically, to an electronic device.

### BACKGROUND

With continuous development of electronic devices, electronic devices having displays (such as mobile phones and tablet computers) have become an indispensable part of people's daily life and work. Grounding is usually designed for the display of the electronic device to optimize performance. To be specific, the display is electrically connected to a metal component (for example, a shielding can) in the electronic device, to form a ground return path, so as to implement grounding of the display.

Currently, conductive foam is usually used to implement an electrical connection of the display. However, the conductive foam requires a great working height and a large contact area, which severely affects an overall device thickness and component layout space. In addition, because the conductive foam is compressed during working, the conductive foam generates a large pushing force on a screen. Consequently, a mura risk and a delamination risk of the screen are high, affecting reliability of the screen.

Therefore, it is urgent to provide a display electrical connection solution that can improve the reliability of the screen and expand the component layout space in the electronic device while reducing the overall device thickness.

### SUMMARY

This application provides an electronic device, to improve reliability of a screen and expand component layout space in the electronic device while reducing an overall device thickness.

According to a first aspect, an electronic device is provided, including a first display, a conductive component, an elastic member, and a metal component, where the conductive component and the elastic member are disposed between the first display and the metal component, the conductive component is electrically connected to the first display, and the elastic member is electrically connected to the metal component; the conductive component includes a connection part and an abutting part, and the connection part is connected to the first display; and the elastic member includes a first end, a second end, and a deformation section located between the first end and the second end, where the first end is connected to the metal component, and the second end abuts against the abutting part under an action of an elastic force generated by the deformation section, to electrically connect the elastic member and the conductive component.

In embodiments of this application, the first display is electrically connected to the conductive component, and the elastic member is electrically connected to the metal component. Under an action of an elastic force of the elastic member, the conductive component and the elastic member can be reliably electrically connected, thereby implementing a reliable electrical connection between the first display and the metal component. The elastic member occupies small space, which helps reduce an overall device thickness and expand component layout space in the electronic device, to improve space utilization. In addition, the elastic member generates a small pushing force on a screen, which can reduce or avoid a delamination risk of the screen. In addition, the conductive component can disperse the elastic force of the elastic member to a surface, which can alleviate or avoid a mura problem, to improve reliability of the screen.

With reference to the first aspect, in some implementations of the first aspect, the second end and the abutting part are in point contact, and the abutting part and the first display are in surface contact.

The abutting part may disperse an action force applied by the elastic member to a large surface, so as to alleviate or avoid the mura problem.

With reference to the first aspect, in some implementations of the first aspect, the first display includes a display layer and a first conductive layer that are stacked, the first conductive layer is disposed on a side that is of the display layer and that is away from a light-emitting surface, and the first conductive layer is electrically connected to the conductive component.

With reference to the first aspect, in some implementations of the first aspect, the first conductive layer is of a single-layer structure or a multi-layer structure.

With reference to the first aspect, in some implementations of the first aspect, the first conductive layer is of the single-layer structure, and a material of the first conductive layer includes at least one of the following materials: stainless steel, titanium alloy, aluminum alloy, vinylene carbonate, copper, silver, carbon fiber, titanium carbide, carbon nanotube, graphene, or zinc oxide.

With reference to the first aspect, in some implementations of the first aspect, the first conductive layer is of the multi-layer structure, the first conductive layer includes a first dielectric layer and a first metal layer that are stacked, the first dielectric layer is disposed between the display layer and the first metal layer, and the first metal layer is electrically connected to the conductive component.

With reference to the first aspect, in some implementations of the first aspect, a material of the first dielectric layer includes at least one of the following materials: thermoplastic polyurethane elastomer rubber, polypropylene, polyethylene terephthalate, polyvinylidene fluoride, or foam; and/or a material of the first metal layer includes at least one of the following materials: stainless steel, copper, titanium alloy, aluminum alloy, or silver.

With reference to the first aspect, in some implementations of the first aspect, the first conductive layer is a cushioning heat dissipation film.

With reference to the first aspect, in some implementations of the first aspect, the connection part includes a first cover layer, a support layer, and a second cover layer that are stacked, the first cover layer is disposed on a side that is of the support layer and that is close to the first display, and the second cover layer is disposed on a side that is of the support layer and that is close to the elastic member; and the abutting part includes a second conductive layer, and the second conductive layer is configured to electrically connect to the elastic member.

With reference to the first aspect, in some implementations of the first aspect, the second conductive layer includes a second metal layer, a second dielectric layer, and a third metal layer that are stacked, the second metal layer is disposed on a side that is of the second dielectric layer and that is close to the first display, and the third metal layer is disposed on a side that is of the second dielectric layer and that is close to the elastic member.

With reference to the first aspect, in some implementations of the first aspect, the second conductive layer further includes a first plating layer and a second plating layer, the first plating layer is disposed on a side that is of the second metal layer and that is close to the first display, and the second plating layer is disposed on a side that is of the third metal layer and that is close to the elastic member.

With reference to the first aspect, in some implementations of the first aspect, the second dielectric layer and the support layer are formed integrally.

With reference to the first aspect, in some implementations of the first aspect, the connection part further includes an adhesive layer, the adhesive layer is disposed on a side that is of the first cover layer and that is close to the first display, and the adhesive layer is configured to adhere the connection part to the first display.

With reference to the first aspect, in some implementations of the first aspect, materials of the first cover layer and the second cover layer are polyimide.

With reference to the first aspect, in some implementations of the first aspect, when the abutting part of the conductive component does not abut against the second end, there is a preset distance between a surface that is of the abutting part and that faces the first display and a surface that is of the connection part and that faces the first display, and the preset distance is used for the abutting part to move within the preset distance in a thickness direction of the first display under an action of an elastic force of the elastic member until the abutting part abuts against the first display.

Because of the preset distance, there is a gap between the abutting part and the first display. In this way, an action force for abutting the abutting part against the first display is provided only by the elastic member, so that controllability is good, to facilitate design of a size parameter and the elastic force of the elastic member. In addition, the gap can offset errors generated in processes such as processing and assembly, to avoid causing or aggravating the mura problem.

With reference to the first aspect, in some implementations of the first aspect, the conductive component further includes an elastic arm, and the elastic arm is connected to the connection part and the abutting part.

The elastic arm is prone to deform, so that the entire abutting part can move in a direction close to the first display relative to the connection part.

With reference to the first aspect, in some implementations of the first aspect, a material of the elastic arm includes at least one of the following materials: polyimide, thermoplastic polyurethane elastomer rubber, polypropylene, polyethylene terephthalate, or polyvinylidene fluoride.

With reference to the first aspect, in some implementations of the first aspect, a surface that is of the second end and that faces the first display includes an arc surface protruding toward the first display, and the second end abuts against the abutting part by using the arc surface.

The design of the arc surface can ensure reliability of an electrical connection between the second end and the abutting part.

With reference to the first aspect, in some implementations of the first aspect, the first end is welded to the metal component.

With reference to the first aspect, in some implementations of the first aspect, the deformation section is arc-shaped.

The elastic member is designed as a single cantilever, which can ensure stability of the electrical connection.

With reference to the first aspect, in some implementations of the first aspect, the elastic member is sheet-shaped.

With reference to the first aspect, in some implementations of the first aspect, the metal component is a shielding can, a metal bracket, or a middle frame.

With reference to the first aspect, in some implementations of the first aspect, a recess part is disposed on a surface that is of the metal component and that faces the elastic member, and a bottom wall of the recess part is configured to connect to the first end.

The recess part is disposed on the metal component to connect the elastic member, so that an overall device height can be reduced without affecting another component.

With reference to the first aspect, in some implementations of the first aspect, the first display includes a display region and a non-display region, the non-display region surrounds the display region, a projection of the elastic member in a first direction is located in the display region, and the first direction is the thickness direction of the first display.

The elastic member and the conductive component may be disposed in the display region of the first display, which facilitates flexible layout of electrical connection points, and can further reduce a black border formed by the non-display region.

With reference to the first aspect, in some implementations of the first aspect, the electronic device further includes a second display, the second display is a flexible screen that is capable of being folded or unfolded along a folding axis, the first display includes a glass cover, the first display and the second display are disposed opposite to each other, and the conductive component, the elastic member, and the metal component are disposed between the first display and the second display.

With reference to the first aspect, in some implementations of the first aspect, the electronic device further includes a first circuit board and a second circuit board; a projection of the first circuit board in a second direction overlaps a projection of the second display in an unfolded state in the second direction, and overlaps a projection of the first display in the second direction; a projection of the second circuit board in the second direction overlaps the projection of the second display in the unfolded state in the second direction, and does not overlap the projection of the first display in the second direction; and the second direction is a thickness direction of the electronic device. The electronic device further includes a system on chip, and a radio frequency integrated circuit, where the system on chip is disposed on the second circuit board, and the radio frequency integrated circuit is disposed on the first circuit board. The electronic device further includes a first housing and a second housing, the first housing and the second housing may rotate relative to each other along the folding axis, the first circuit board is accommodated in accommodating space formed by the first housing, the second circuit board is accommodated in accommodating space formed by the second housing, a first antenna is disposed in the first housing, and a second antenna is disposed in the second housing.

This layout can improve the volume ratio of the entire battery, maximize the battery capacity in ultimate space, improve the overall battery life of the electronic device, and bring better experience for mobile office.

With reference to the first aspect, in some implementations of the first aspect, the electronic device further includes a back cover, the back cover and the first display are disposed opposite to each other, the first display includes a glass cover, and the conductive component, the elastic member, and the metal component are disposed between the back cover and the first display.

According to a second aspect, a display module is provided, including a display and a conductive component, where the conductive component is electrically connected to the display; the conductive component includes a connection part and an abutting part, the connection part is connected to the first display, and the abutting part is configured to abut against an elastic member.

With reference to the second aspect, in some implementations of the second aspect, the display includes a display layer and a first conductive layer that are stacked, the first conductive layer is disposed on a side that is of the display layer and that is away from a light-emitting surface, and the first conductive layer is electrically connected to the conductive component.

With reference to the second aspect, in some implementations of the second aspect, the first conductive layer is of a single-layer structure or a multi-layer structure.

With reference to the second aspect, in some implementations of the second aspect, the first conductive layer is of the single-layer structure, and a material of the first conductive layer includes at least one of the following materials: stainless steel, titanium alloy, aluminum alloy, vinylene carbonate, copper, silver, carbon fiber, titanium carbide, carbon nanotube, graphene, or zinc oxide.

With reference to the second aspect, in some implementations of the second aspect, the first conductive layer is of a multi-layer structure, the first conductive layer includes a first dielectric layer and a first metal layer that are stacked, the first dielectric layer is disposed between the display layer and the first metal layer, and the first metal layer is electrically connected to the conductive component.

With reference to the second aspect, in some implementations of the second aspect, a material of the first dielectric layer includes at least one of the following materials: thermoplastic polyurethane elastomer rubber, polypropylene, polyethylene terephthalate, polyvinylidene fluoride, or foam; and/or a material of the first metal layer includes at least one of the following materials: stainless steel, copper, titanium alloy, aluminum alloy, or silver.

With reference to the second aspect, in some implementations of the second aspect, the first conductive layer is a cushioning heat dissipation film.

With reference to the second aspect, in some implementations of the second aspect, the connection part includes a first cover layer, a support layer, and a second cover layer that are stacked, the first cover layer is disposed on a side that is of the support layer and that is close to the display, and the second cover layer is disposed on a side that is of the support layer and that is away from the display; and the abutting part includes a second conductive layer, and the second conductive layer is configured to electrically connect to the first conductive layer.

With reference to the second aspect, in some implementations of the second aspect, the second conductive layer includes a second metal layer, a second dielectric layer, and a third metal layer that are stacked, the second metal layer is disposed on a side that is of the second dielectric layer and that is close to the display, and the third metal layer is disposed on a side that is of the second dielectric layer and that is away from the display.

With reference to the second aspect, in some implementations of the second aspect, the second conductive layer further includes a first plating layer and a second plating layer, the first plating layer is disposed on a side that is of the second metal layer and that is close to the display, and the second plating layer is disposed on a side that is of the third metal layer and that is away from the display.

With reference to the second aspect, in some implementations of the second aspect, the second dielectric layer and the support layer are located at a same layer.

With reference to the second aspect, in some implementations of the second aspect, the connection part further includes an adhesive layer, the adhesive layer is disposed on a side that is of the first cover layer and that is close to the display, and the adhesive layer is configured to adhere the connection part to the display.

With reference to the second aspect, in some implementations of the second aspect, there is a gap between a surface that is of the abutting part and that faces the display and a surface that is of the display and that faces the abutting part, and the gap is used for the abutting part to move in the gap in a thickness direction of the display under an action of an elastic force of the elastic member until the abutting part abuts against the display.

With reference to the second aspect, in some implementations of the second aspect, the conductive component further includes an elastic arm, and the elastic arm is connected to the connection part and the abutting part.

With reference to the second aspect, in some implementations of the second aspect, a material of the elastic arm includes at least one of the following materials: polyimide, thermoplastic polyurethane elastomer rubber, polypropylene, polyethylene terephthalate, or polyvinylidene fluoride.

According to a third aspect, an elastic component is provided, including an elastic member and a metal component, where the elastic member includes a first end, a second end, and a deformation section located between the first end and the second end, the first end is connected to the metal component, and the deformation section can be elastically deformed.

With reference to the third aspect, in some implementations of the third aspect, a surface that is of the second end and that is away from the metal component includes an arc surface that protrudes away from the metal component.

With reference to the third aspect, in some implementations of the third aspect, the first end is welded to the metal component.

With reference to the third aspect, in some implementations of the third aspect, the metal component is a shielding can, a metal bracket, or a middle frame in the electronic device.

With reference to the third aspect, in some implementations of the third aspect, a recess part is disposed on a surface that is of the metal component and that faces the elastic member, and a bottom wall of the recess part is configured to connect to the first end.

With reference to the third aspect, in some implementations of the third aspect, the elastic member is sheet-shaped.

According to a fourth aspect, a conductive component is provided, including a connection part, an elastic arm, and an abutting part, where the elastic arm is connected to the connection part and the abutting part, the connection part is configured to connect to a first component, the abutting part is configured to abut against a second component, the first component and the second component are respectively located on two sides of the conductive component in a thickness direction, there is a preset distance between a surface that is of the connection part and that is configured to connect to the first component and a surface that is of the abutting part and that is located on a same side as the surface, and the preset distance is used for the abutting part to move within the preset distance under an action force of the second component until the abutting part abuts against the first component.

With reference to the fourth aspect, in some implementations of the fourth aspect, a material of the elastic arm includes at least one of the following materials: polyimide, thermoplastic polyurethane elastomer rubber, polypropylene, polyethylene terephthalate, or polyvinylidene fluoride.

With reference to the fourth aspect, in some implementations of the fourth aspect, the connection part includes a first cover layer, a support layer, and a second cover layer that are stacked, the first cover layer is disposed on a side that is of the support layer and that is close to the first component, and the second cover layer is disposed on a side that is of the support layer and that is close to the second component; and the abutting part includes a second conductive layer, and the second conductive layer is configured to electrically connect to the second component.

With reference to the fourth aspect, in some implementations of the fourth aspect, the second conductive layer includes a second metal layer, a second dielectric layer, and a third metal layer that are stacked, the second metal layer is disposed on a side that is of the second dielectric layer and that is close to the first component, and the third metal layer is disposed on a side that is of the second dielectric layer and that is close to the second component.

With reference to the fourth aspect, in some implementations of the fourth aspect, the second conductive layer further includes a first plating layer and a second plating layer, the first plating layer is disposed on a side that is of the second metal layer and that is close to the first component, and the second plating layer is disposed on a side that is of the third metal layer and that is close to the second component.

With reference to the fourth aspect, in some implementations of the fourth aspect, the second dielectric layer and the support layer are located at a same layer.

With reference to the fourth aspect, in some implementations of the fourth aspect, the connection part further includes an adhesive layer, the adhesive layer is disposed on a side that is of the first cover layer and that is close to the first component, and the adhesive layer is configured to adhere the connection part to the first component.

For beneficial effects of apparatuses according to the second aspect to the fourth aspect, refer to related descriptions of the first aspect. For brevity, details are not described again.

### BRIEF DESCRIPTION OF DRAWINGS

FIG. 1 is a diagram of a structure of an electronic device according to an embodiment of this application;
FIG. 2 is an exploded view of the electronic device shown in FIG. 1;
FIG. 3 is a diagram of two possible folded states of the electronic device shown in FIG. 1;
FIG. 4 is a diagram of a solution for implementing an electrical connection of a display by using conductive foam;
FIG. 5 is a diagram of a structure of an electronic device according to an embodiment of this application;
FIG. 6 is a sectional view of the electronic device shown in FIG. 5;
FIG. 7 is a diagram of a structure of a display of an electronic device according to an embodiment of this application;
FIG. 8 is a diagram of a structure of a display of an electronic device according to an embodiment of this application;
FIG. 9 is a diagram of a structure of a conductive component in an electronic device according to an embodiment of this application;
FIG. 10 is a diagram of another structure of a conductive component in an electronic device according to an embodiment of this application;
FIG. 11 is a diagram of another structure of a conductive component in an electronic device according to an embodiment of this application;
FIG. 12 is a diagram of another structure of a conductive component in an electronic device according to an embodiment of this application;
FIG. 13 is a diagram of a structure of an elastic member in an electronic device according to an embodiment of this application;
FIG. 14 is a diagram of an elastic force curve of an elastic member in an electronic device according to an embodiment of this application;
FIG. 15 is a diagram of a structure of a metal component in an electronic device according to an embodiment of this application;
FIG. 16 is a diagram of a structure of an electronic device according to an embodiment of this application; and
FIG. 17 is a diagram of a structure of an electronic device according to an embodiment of this application.

### DESCRIPTION OF EMBODIMENTS

The following describes technical solutions of this application with reference to the accompanying drawings.

It should be noted that, in descriptions of embodiments of this application, unless otherwise specified, "/" means "or". For example, A/B may indicate A or B. "And/or" in this specification merely describes an association relationship between associated objects, and indicates that three relationships may exist. For example, A and/or B may indicate the following three cases: Only A exists, both A and B exist, and only B exists.

The terms "first" and "second" in embodiments of this application are merely intended for a purpose of description, and shall not be understood as an indication or implication of relative importance or implicit indication of a quantity of indicated technical features. Therefore, a feature limited by "first", "second", or the like may explicitly or implicitly include one or more features. In addition, in the descriptions of embodiments of this application, "a plurality of" means two or more, and "at least one" and "one or more" mean one, two, or more. Singular expression forms "one", "a", "the", "the foregoing", "this", and "the one" are also intended to include expression forms such as "one or more", unless otherwise specified in the context clearly.

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In the descriptions of embodiments of this application, orientations or position relationships indicated by terms "up", "down", "inside", "outside", "vertical", "horizontal", and the like are defined relative to orientations or positions in which components are schematically placed in the accompanying drawings. It should be understood that these directional terms are relative concepts, and are used for relative description and clarification, but not indicate or imply that a specified apparatus or component needs to have a specific orientation or be constructed and operated in a specific orientation. These directional terms may vary based on changes of positions of the components in the accompanying drawings, and therefore cannot be understood as a limitation on this application. In addition, "vertical" in this application is not strictly vertical, but within an allowable error range. "Parallel" is not strictly parallel, but within an allowable error range.

In embodiments of this application, same reference numerals indicate same components or parts. For same components or parts in embodiments of this application, only one component or part may be marked with a reference numeral in the figure as an example. It should be understood that, this is also applicable to reference numerals of other same components or parts. In addition, the parts in the accompanying drawings are not drawn to actual scale. Dimensions and sizes of the parts shown in the figures are merely examples, and should not be understood as a limitation on this application.

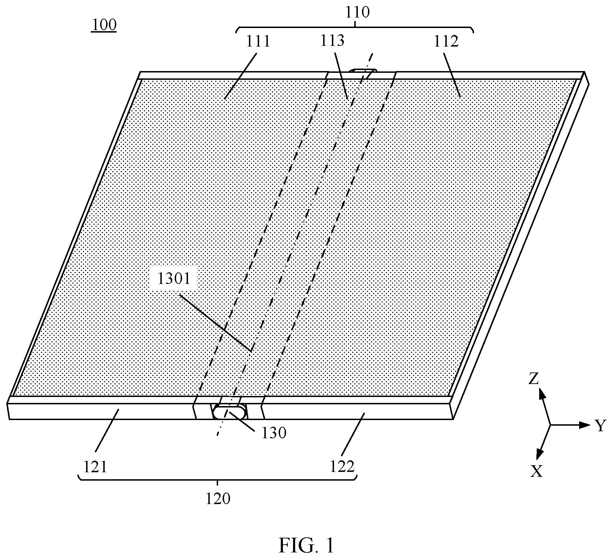

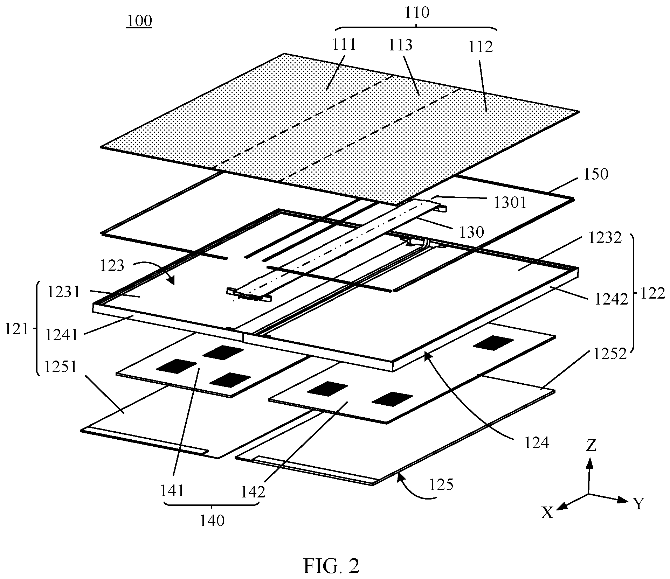

FIG. 1 and FIG. 2 are diagrams of structures of an electronic device 100 according to an embodiment of this application. FIG. 1 is a diagram of assembly of the electronic device 100. FIG. 2 is an exploded view of the electronic device 100.

In embodiments of this application, the electronic device 100 may be an electronic device having a display function, for example, a mobile phone, a tablet computer, a smartwatch, an e-reader, a notebook computer, a wearable device, a camera, a vehicle-mounted computer, or a smart screen. A specific form of the electronic device 100 is not specially limited in embodiments of this application. For ease of description and understanding, the following uses the electronic device 100 as a foldable mobile phone as an example for description.

For ease of description, in the following, a direction parallel to a folding axis of the electronic device 100 is defined as an X direction, a direction parallel to a screen and perpendicular to the folding axis of the electronic device 100 when the electronic device 100 is in an unfolded state is defined as a Y direction, and a direction perpendicular to the screen when the electronic device 100 is in an unfolded state is defined as a Z direction. The Z direction is perpendicular to the X direction and perpendicular to the Y direction. Herein, definitions of the X, Y, and Z directions are also applicable to the accompanying drawings to be described below. It should be noted that the definitions of the X, Y, and Z directions are merely intended to facilitate description of a location relationship and a connection relationship between components in embodiments of this application, and should not be construed as a limitation on embodiments of this application.

Refer to FIG. 1 and FIG. 2. The electronic device 100 may include a flexible display 110 and a housing 120. The housing 120 forms accommodating space, and is configured to accommodate various components of the electronic device 100. The flexible display 110 is disposed in the accommodating space formed by the housing 120, and is connected to the housing 120. The housing 120 may further protect the electronic device 100 and support the entire electronic device.

The flexible display 110 is configured to display an image. In FIG. 1 and FIG. 2, a structure filled with a dot matrix pattern is used as an example to indicate the flexible display 110. The flexible display 110 has features of strong flexibility and foldability, and can provide a user with a new foldability-based interaction mode. A display panel of the flexible display 110 may use any one of a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a quantum dot light-emitting diode (quantum dot light-emitting diode, QLED), and the like. This is not limited in embodiments of this application.

In this embodiment of this application, the flexible display 110 has a light-emitting surface that can display an image, and a surface that is on the flexible display 110 and that is opposite to the light-emitting surface may be referred to as a back surface of the flexible display 110. The back surface of the flexible display 110 is accommodated in the accommodating space formed by the housing 120 and is invisible to the user.

The housing 120 may include a first housing 121 and a second housing 122. The first housing 121 and the second housing 122 can rotate relative to each other around a folding axis 1301 of the electronic device 100. For example, the first housing 121 can rotate relative to the second housing 122 around the folding axis 1301, and/or the second housing 122 can rotate relative to the first housing 121 around the folding axis 1301, so that the electronic device 100 switches between a folded state and an unfolded state.

In some embodiments, the electronic device 100 may further include a hinge mechanism 130. The hinge mechanism 130 is configured to connect the first housing 121 and the second housing 122, to implement rotation of the first housing 121 and the second housing 122 relative to each other around the folding axis 1301. Correspondingly, an electronic component disposed on the first housing 121 or an electronic component disposed on the second housing 122 may rotate around the folding axis 1301.

Because the first housing 121 and the second housing 122 are hinged by using the hinge mechanism 130, the first housing 121 and the second housing 122 may be in a stacked state, or may be in an unfolded state and have an included angle. For example, when the electronic device 100 is folded, an angle between the first housing 121 and the second housing 122 may tend to 0°. For another example, when the electronic device 100 is unfolded, an angle between the first housing 121 and the second housing 122 may tend to 180°.

In an example, the hinge mechanism 130 may include a main shaft, a first connection component, and a second connection component. The first connection component may be fastened to the first housing 121, and the second connection component may be fastened to the second housing 122. The first connection component and the second connection component may rotate relative to the main shaft. The first connection component and the second connection component may move relative to each other, to drive the first housing 121 and the second housing 122 to move relative to each other, thereby implementing an opening and closing function of the electronic device 100.

In some embodiments, as shown in FIG. 2, the housing 120 may include a middle frame 123. The middle frame 123 is a support frame located inside the electronic device 100. The middle frame 123 is generally made of a metal material, for example, copper, magnesium alloy, or stainless steel. In this embodiment of this application, the middle frame 123 may be configured to support and fasten the flexible display 110. For example, as shown in FIG. 2, the flexible display 110 (which may be specifically the back surface of the flexible display 110) may be adhered to the middle frame 123 by using an adhesive 150.

In some embodiments, as shown in FIG. 2, the housing 120 may include a side frame 124. The side frame 124 has a structure surrounding the periphery of the electronic device 100. For example, the side frame 124 may be disposed around the periphery of the flexible display 110, and may be configured to help fasten the flexible display 110. For example, the side frame 124 may be disposed around the periphery of the middle frame 123, and the side frame 124 is connected to the middle frame 123. The side frame 124 may be made of a metal material, for example, copper, magnesium alloy, or stainless steel, or may be made of a non-metal material, for example, plastic, glass, or ceramic.

In some embodiments, as shown in FIG. 2, the housing 120 may include a back cover 125. The back cover 125 is usually disposed on a back of the electronic device 100. For example, the back cover 125 is disposed on a side that is of the middle frame 123 and that is away from the flexible display 110. The back cover 125 is mainly configured to protect components, a battery, and the like inside the electronic device 100. For example, the back cover 125 may prevent external impurities such as dust and water stains from entering the mobile phone. In some embodiments, the back cover 125 may be further configured to fasten a display other than the flexible display 110, or configured to fasten an antenna or the like.

In some embodiments, the middle frame 123, the side frame 124, and the back cover 125 may be three parts of the housing 120 of the electronic device 100. In other words, the middle frame 123 may be connected to the side frame 124, and the side frame 124 may be connected to the back cover 125. A form of the connection includes but is not limited to clamping, adhering, welding, riveting, clearance fitting, and another detachable connection manner or non-detachable connection manner. In some other embodiments, the side frame 124 and the middle frame 123 may be of an integrated structure (or referred to as an integrated molding structure); or the side frame 124 and the back cover 125 may be of an integrated structure.

In some embodiments, as shown in FIG. 2, the middle frame 123 may include a first middle frame part 1231 and a second middle frame part 1232 that are arranged in a direction (the Y direction shown in FIG. 2) perpendicular to the folding axis 1301, where the first middle frame part 1231 and the second middle frame part 1232 are respectively located on two sides of the folding axis 1301.

In some embodiments, the side frame 124 may include a first side frame part 1241 and a second side frame part 1242 that are arranged in the direction (the Y direction shown in FIG. 2) perpendicular to the folding axis 1301, where the first side frame part 1241 and the second side frame part 1242 are respectively located on the two sides of the folding axis 1301.

In some embodiments, the back cover 125 may include a first back cover part 1251 and a second back cover part 1252 that are arranged in the direction (the Y direction shown in FIG. 2) perpendicular to the folding axis 1301, where the first back cover part 1251 and the second back cover part 1252 are respectively located on the two sides of the folding axis 1301.

In embodiments of this application, at least a part of the first middle frame part 1231, the second middle frame part 1232, the first side frame part 1241, the second side frame part 1242, the first back cover part 1251, and the second back cover part 1252 may form a first housing 121 and a second housing 122 that are configured to support the flexible display 110.

For example, the first housing 121 may include the first middle frame part 1231, the first side frame part 1241, and the first back cover part 1251, and the second housing 122 may include the second middle frame part 1232, the second side frame part 1242, and the second back cover part 1252. The first middle frame part 1231, the first side frame part 1241, and the first back cover part 1251 are located on a same side of the folding axis 1301, and the second middle frame part 1232, the second side frame part 1242, and the second back cover part 1252 are located on a same side of the folding axis 1301.

In some embodiments, the flexible display 110 may include a first display part 111 corresponding to the first housing 121, a second display part 112 corresponding to the second housing 122, and a third display part 113 corresponding to the hinge mechanism 130. The third display part 113 is located between the first display part 111 and the second display part 112, and the third display part 113 is a foldable display part. For example, the first display part 111 is fastened to the first housing 121, the second display part 112 is fastened to the second housing 122, and the third display part 113 is fastened to the hinge mechanism 130. Under the action of the hinge mechanism 130, the first housing 121 and the second housing 122 may approach or move away from each other. Correspondingly, the first display part 111 and the second display part 112 may approach or move away from each other, and the third display part 113 is bent, so that the flexible display 110 can be folded or unfolded.

Refer to FIG. 2. The electronic device 100 further includes a circuit board 140. The circuit board 140 is accommodated in the accommodating space formed by the housing 120, and is connected to the housing 120 (for example, the middle frame 123). The circuit board 140 has a function of supporting circuit elements and interconnecting the circuit elements. Specifically, the circuit board 140 is a support body of electronic components and a carrier for an electrical connection between the electronic components. The electronic components disposed on the circuit board 140 include but are not limited to a capacitor, an inductor, a resistor, a shielding can, a processor, a memory, a connector, a camera, a flashlight, a microphone, a battery, an antenna, and the like. In some embodiments, a circuit board integrated with electronic components (for example, a processor, a radio frequency chip, a board-to-board connector, a controller, or an external interface) may be referred to as a mainboard.

In some embodiments, the circuit board 140 may include a first circuit board (or referred to as a first mainboard) 141 and a second circuit board (or referred to as a second mainboard) 142. The first circuit board 141 and the second circuit board 142 are respectively located on two sides of the folding axis 1301. For example, the first circuit board 141 is accommodated in accommodating space formed by the first housing 121 and the first display part 111, and the second circuit board 142 is accommodated in accommodating space formed by the second housing 122 and the second display part 112.

In embodiments of this application, the electronic device 100 may switch between the folded state and the unfolded state. When the electronic device 100 is in the folded state, the electronic device 100 occupies small space. When the electronic device 100 is in the unfolded state, the electronic device 100 can display a large screen, to increase a viewing range of the user.

For example, the electronic device 100 shown in FIG. 1 is in the unfolded state. Correspondingly, the flexible display 110 is in the unfolded state, and the first display part 111 and the second display part 112 are located on a same plane, so that the user can conveniently use the large screen.

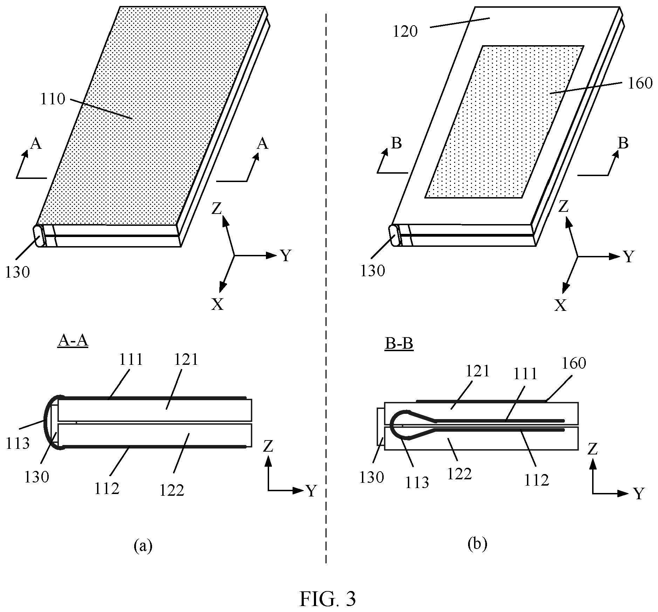

For example, FIG. 3 shows two possible folded states of the electronic device 100. In embodiments of this application, that the electronic device 100 is in the folded state may mean that the electronic device 100 is currently bent, and a bending degree of the electronic device 100 reaches a maximum. In this case, the first display part 111 and the second display part 112 may be considered to be located on different planes.

(a) in FIG. 3 shows a state in which a screen of the electronic device 100 is folded outward, namely, an outward folded state. In the outward folded state, the first display part 111, the second display part 112, and the third display part 113 may form a housing accommodation region for accommodating the first housing 121, the second housing 122, and the hinge mechanism 130. In other words, the first housing 121, the second housing 122, and the hinge mechanism 130 may be accommodated in spacing space between the first display part 111 and the second display part 112. In this case, the first display part 111 and the second display part 112 are back to back, the first housing 121 and the second housing 122 are face to face, and the third display part 113 is bent.

(b) in FIG. 3 shows a state in which the screen of the electronic device 100 is folded inward, namely, an inward folded state. In the inward folded state, the first housing 121, the second housing 122, and the hinge mechanism 130 may form a screen accommodation region for accommodating the flexible display 110. In other words, the flexible display 110 may be accommodated in spacing space between the first housing 121 and the second housing 122. In this case, the first display part 111 and the second display part 112 are face to face, the first housing 121 and the second housing 122 are back to back, and the third display part 113 is bent.

In some embodiments, when the flexible display 110 is an inward-foldable screen, the electronic device 100 may further include a cover screen 160. The cover screen 160 is usually disposed on a side of the back cover 125, and is disposed opposite to a non-bent region (for example, the first display part 111 or the second display part 112) of the flexible display 110. For example, the cover screen 160 may be disposed on a front side of the electronic device 100 in the folded state. The cover screen 160 may be configured to display a user interface, an application, an image, a video, a notification, or information that facilitates a daily operation or viewing by the user. In some embodiments, the cover screen 160 may have a touch function, to facilitate interaction between the user and the electronic device 100 by using the cover screen 160. The cover screen 160 (which may be specifically a rear side of the cover screen 160) may be adhered to the middle frame 123 by using the adhesive 150. Generally, the cover screen 160 includes a glass cover, and the glass cover is disposed on an outermost side of a light-emitting surface of the cover screen 160.

In some embodiments, the flexible display 110 may also be referred to as a primary screen or a foldable screen, and the cover screen 160 may also be referred to as a secondary screen or a front screen. In embodiments of this application, the flexible display 110 and the cover screen 160 are collectively referred to as the display. In the following embodiments, if the electronic device 100 includes a plurality of displays, different displays are correspondingly distinguished by using a first display, a second display, and the like.

It should be understood that FIG. 1 to FIG. 3 merely illustrate that the electronic device 100 includes two foldable parts (the first housing 121 and the second housing 122), in other words, the electronic device 100 has one folding axis. In some other embodiments, the electronic device 100 may further include three or more foldable parts. Correspondingly, the electronic device 100, for example, may be a two-fold mobile phone, a trifold mobile phone, and a multi-fold mobile phone, has two or more folding axes. In this way, the user may fold the electronic device 100 along a plurality of folding axes a plurality of times. As a quantity of foldable parts of the electronic device 100 increases, when a screen size remains the same in the unfolded state, space occupied by the electronic device 100 may be further reduced in the folded state, or when space occupied by the electronic device 100 remains the same in the folded state, a screen area for display may be further increased in the unfolded state.

It should be further understood that FIG. 1 to FIG. 3 only illustrate some components included in the electronic device 100. Shapes, sizes, and structures of these components are not limited by FIG. 1 to FIG. 3. In some other embodiments, the electronic device 100 may further include more or fewer components than those shown in the figure. This is not limited in embodiments of this application. In some other embodiments, components included in the electronic device 100 differ based on different types of the electronic device 100. For example, the electronic device 100 may alternatively be a slider mobile phone, a bar-type mobile phone, or the like. The structure of the foldable mobile phone provided in embodiments of this application is merely an example for description.

Grounding is usually designed for the display of the electronic device to optimize performance. To be specific, the display is electrically connected to a metal component (for example, a middle frame, a mainboard bracket, or a shielding can) in the electronic device, to form a ground return path, so as to implement grounding of the display. For example, the user using the electronic device usually has static electricity. After the user touches the electronic device, the static electricity is discharged through the display, causing electrostatic discharge (electrostatic discharge, ESD). To improve an anti-static capability of the display, the display is usually grounded. For another example, when the display works normally, charges accumulate on electronic components (such as light-emitting diodes and semiconductors) in the display. Alternatively, after the electronic device falls and collides with an object, static electricity is generated due to friction, and charges gradually accumulate on the display. If the charges accumulate excessively on the display, normal use of the display may be affected. For example, a phenomenon like a bright circle or light leakage may occur because an on/off state of a local region of the display cannot be effectively controlled. Grounding the display can transfer excessive charges on the display, thereby avoiding an impact of excessive charge accumulation on a display effect of the display. For another example, if an antenna is disposed between two displays (for example, the flexible display 110 and the cover screen 160) disposed opposite to each other, charges on the display cause a clutter problem of the antenna, for example, radiated spurious emission (radiated spurious emission, RSE). Grounding at least one of the displays can transfer the charges on the display, thereby improving radio frequency performance of the electronic device.

Currently, conductive foam is usually used to implement an electrical connection of the display. The conductive foam is a foam material with conductive performance. A principle of the conductive foam is to mix a filler like carbon fiber or copper powder with good conductive performance into a foam material, so that the foam material has a conductive characteristic. However, the conductive foam requires a large working height and a large contact area. For example, to resolve a mura problem of the display, conductive foam with an initial height of 1.5 mm and a working height of 0.5 mm to 0.8 mm is usually selected in a conventional design. For another example, to avoid an RSE problem, there is a requirement on a minimum design area (for example, a contact area meets 2.5 mm*6.5 mm) of the conductive foam. However, a plurality of pieces of conductive foam usually need to be disposed inside the electronic device, which severely affects an overall device thickness and component layout space. In addition, the conductive foam is compressed during working. Each piece of conductive foam generates a pushing force of about 1 Newton (newton, symbolized as N) on the display. A larger quantity of conductive foam indicates a larger pushing force on a screen, and a higher mura risk and delamination risk of the screen, affecting the reliability of the screen.

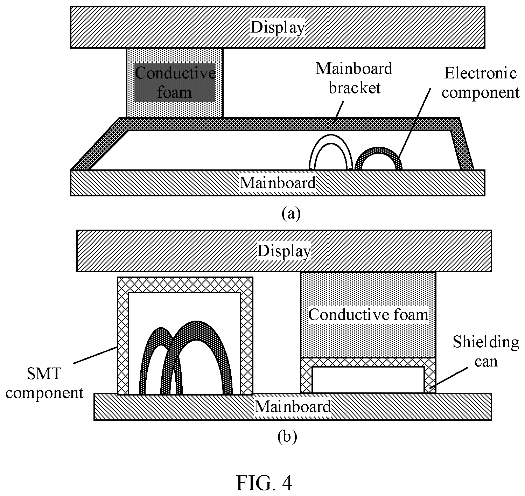

For ease of understanding, for example, FIG. 4 is a diagram of a solution for implementing an electrical connection of a display by using conductive foam.

As shown in (a) in FIG. 4, in a solution, the conductive foam may be disposed between a mainboard bracket (which usually has one or more of the following functions: press-fit of board-to-board connectors, laser-direct-structuring (laser-direct-structuring, LDS) of a laser antenna, component bearing, reinforcement, and the like, and is usually made of a metal material or includes a metal material) and the display, and two ends of the conductive foam respectively abut against the mainboard bracket and the display, to implement the electrical connection of the display. However, this solution has a high requirement on an overall device thickness. Specifically, the mainboard bracket is usually disposed between a mainboard and the display. A gap between a metal surface of the mainboard bracket and a component on the mainboard needs to be greater than 0.2 mm, a thickness of a metal wall of the mainboard bracket needs to be greater than 0.2 mm, and a working height of the conductive foam needs to be greater than 0.5 mm. In a case of maintaining component selection consistency, when the conductive foam is used to electrically connect the mainboard bracket and the display, the height between the mainboard and the display requires more than 0.9 mm of additional inner cavity space in the entire device, where 0.9 mm=0.2 mm+0.2 mm+0.5 mm. As a result, the overall device thickness increases, failing to meet a user demand for thinner and lighter electronic devices (especially foldable devices).

As shown in (b) in FIG. 4, in another solution, the conductive foam may be disposed between a shielding can (which is configured to shield electromagnetic interference and/or reinforce strength of a mainboard, and is usually made of a metal material) and the display, and two ends of the conductive foam respectively abut against the shielding can and the display, to implement the electrical connection of the display. Compared with the solution shown in (a) in FIG. 4, this solution does not have the high requirement on the overall device thickness. Specifically, the shielding can may be disposed on the mainboard by using a surface mount technology (surface mount technology, SMT). A thickness of a metal wall of the shielding can needs to be greater than 0.2 mm, and a working height of the conductive foam needs to be greater than 0.5 mm. When the conductive foam is used to electrically connect the shielding can and the display, the height between the mainboard and the display requires at least 0.7 mm of inner cavity space in the entire device. However, a height of an SMT component (including the shielding can) welded on the mainboard is greater than this value. Therefore, the addition of the conductive foam does not cause an increase in the overall device thickness. However, because the conductive foam is in contact with the shielding can, an area of a surface that is of the shielding can and that is in contact with the conductive foam needs to be greater than an area of the conductive foam. For example, when an area of a contact surface of a single piece of conductive foam is 2.5 mm*6.5 mm=16.25 mm², the shielding can needs to occupy an area of 16.25 mm² on the mainboard. To avoid increasing an overall device height, the shielding can is insufficient to arrange a component inside, in other words, the area of the mainboard occupied by the shielding can cannot be used for arrangement of the component, causing a loss of a layout area of the mainboard. A larger quantity of required conductive foam indicates a greater loss of the layout area. For example, when more than six pieces of conductive foam are disposed, the loss of the layout area of the mainboard is greater than 100 mm², severely affecting component layout space. In addition, because the shape of the conductive foam is designed regularly, the layout difficulty further increases in this solution.

Because the conductive foam is compressed during working, the conductive foam generates a pushing force on the display. The pushing force on the display affects reliability of the display. Generally, a pushing force on a screen generated by a single piece of conductive foam is about 1 N. A larger quantity of required conductive foam indicates a larger pushing force on a screen. For example, when more than six pieces of conductive foam are disposed, a pushing force on a screen of greater than 6 N is generated. The conductive foam applies a pushing force on a screen to a part of the display, causing a great impact on mura. In addition, currently, the display is usually adhered to a housing of the electronic device through adhesive dispensing or by using a double-sided adhesive, and consequently, the pushing force on the screen generated by the conductive foam causes a delamination risk of the screen.

In view of this, this application provides a display electrical connection solution, to improve the reliability of the screen and expand the component layout space in the electronic device while reducing the overall device thickness.

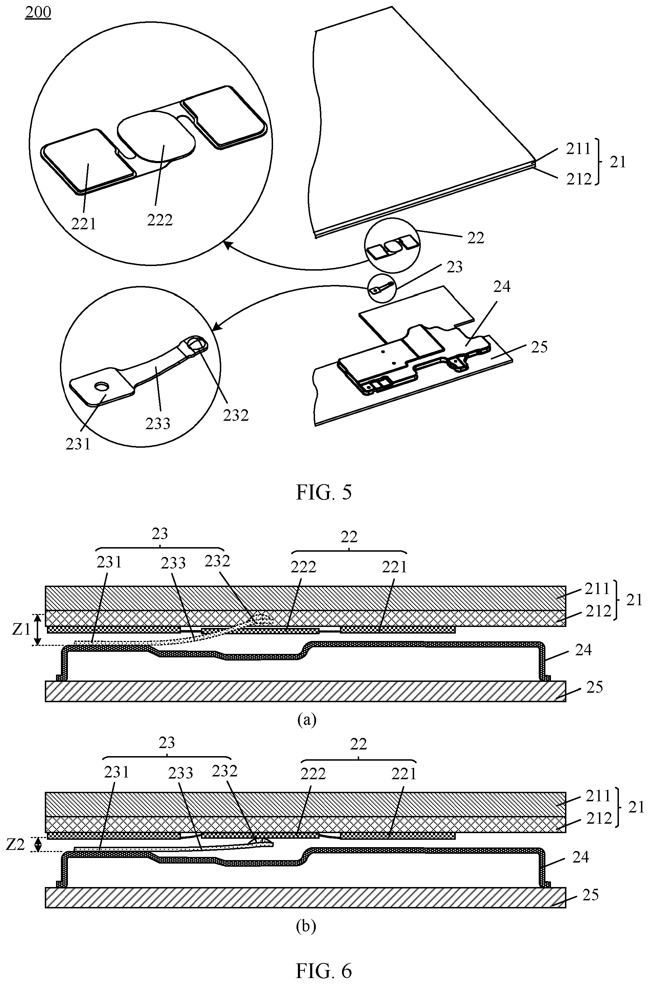

FIG. 5 and FIG. 6 are diagrams of structures of an electronic device according to an embodiment of this application. FIG. 5 is an exploded view of an electronic device 200. FIG. 6 is a partial sectional view of the electronic device 200. The electronic device 200 shown in FIG. 5 and FIG. 6 may be an example of the electronic device 100 shown in FIG. 1.

As shown in FIG. 5 and FIG. 6, the electronic device 200 includes a display 21, a conductive component 22, an elastic member 23, and a metal component 24. The conductive component 22 and the elastic member 23 are disposed between the display 21 and the metal component 24, where the display 21 is electrically connected to the conductive component 22, and the elastic member 23 is electrically connected to the metal component 24.

The conductive component 22 is disposed between the display 21 and the elastic member 23. The conductive component 22 includes a connection part 221 and an abutting part 222. The connection part 221 is connected to the display 21, and the abutting part 222 abuts against the elastic member 23.

The elastic member 23 is disposed between the conductive component 22 and the metal component 24. The elastic member 23 includes a first end 231, a second end 232, and a deformation section 233. The deformation section 233 is located between the first end 231 and the second end 232, and may undergo elastic deformation. The first end 231 is connected to the metal component 24, and the second end 232 abuts against the abutting part 222 under an action of an elastic force generated by the deformation section 233, to electrically connect the elastic member 23 and the conductive component 22.

Refer to FIG. 6. The elastic member 23 shown in (a) in FIG. 6 is in a free state, and an initial height of the elastic member 23 is Z1; and the elastic member 23 shown in (b) in FIG. 6 is in a compressed state, and a working height of the elastic member 23 is Z2. For example, the working height of the elastic member 23 is about 0.25 mm, and is less than a working height of 0.5 mm to 0.8 mm of the conductive foam.

In embodiments of this application, the display 21 is electrically connected to the conductive component 22, and the elastic member 23 is electrically connected to the metal component 24. Under an action of an elastic force of the elastic member 23, the conductive component 22 and the elastic member 23 can be reliably electrically connected, thereby implementing a reliable electrical connection between the display 21 and the metal component 24. Compared with the conductive foam, the elastic member 23 has a smaller working height and contact area, and occupies smaller space, which helps reduce an overall device thickness and expand component layout space in the electronic device, to improve space utilization. In addition, the elastic member 23 generates a small pushing force on a screen, which can reduce or avoid a delamination risk of the screen. In addition, the conductive component 22 can disperse the elastic force of the elastic member 23 to a surface, which can alleviate or avoid a mura problem, to improve reliability of the screen. In addition, the display electrical connection solution provided in this embodiment of this application has a simple structure and low costs.

In this embodiment of this application, the display 21 may be directly or indirectly electrically connected to the conductive component 22. The elastic member 23 may be directly or indirectly electrically connected to the metal component 24.

In some embodiments, the second end 232 and the abutting part 222 are in point contact, and the abutting part 222 and the display 21 are in surface contact.

In some embodiments, as shown in FIG. 5 and FIG. 6, the display 21 includes a display layer 211 and a first conductive layer 212 that are stacked, and the first conductive layer 212 is disposed on a side that is of the display layer 211 and that is away from a light-emitting surface. The display layer 211 is configured to display interface content, for example, an image and/or text data. The first conductive layer 212 is configured to implement an electrical connection of the display 21. Specifically, the first conductive layer 212 is electrically connected to the conductive component 22. In some embodiments, the first conductive layer 212 is further used as a support layer of the display layer 211 to perform a support function.

In embodiments of this application, the first conductive layer 212 may be of a single-layer structure or a multi-layer structure (namely, a composite layer).

In an example, when the first conductive layer 212 is of the single-layer structure, a material of the first conductive layer 212 may be a metal conductive material, for example, stainless steel, titanium alloy, aluminum alloy, vinylene carbonate (vinyl carbonate, VC), copper, or silver, or a non-metal conductive material, for example, carbon fiber, carbon nanotube, titanium carbide, graphene, or zinc oxide, some conductive polymer materials, a conductive ceramic material, or the like. For example, the first conductive layer 212 is sheet-shaped.

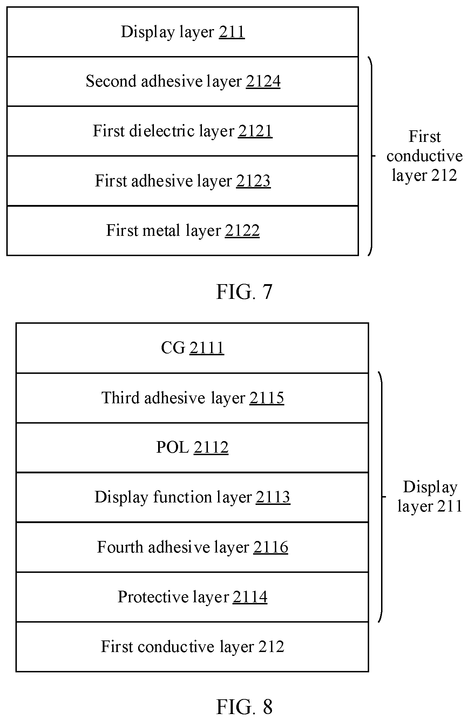

In another example, refer to FIG. 7. When the first conductive layer 212 is of the multi-layer structure, the first conductive layer 212 may include a first dielectric layer 2121 and a first metal layer 2122 that are stacked. The first dielectric layer 2121 is disposed between the display layer 211 and the first metal layer 2122, and the first dielectric layer 2121 serves cushioning and protection functions. The first metal layer 2122 is configured to electrically connect to the conductive component 22, and serves a conductive function. In some cases, the first metal layer 2122 may further perform functions of heat dissipation, support, light shielding, and the like.

For example, a material of the first dielectric layer 2121 may include at least one of thermoplastic polyurethane (thermoplastic polyurethane, TPU) elastomer rubber, polypropylene, polyethylene terephthalate (polyethylene terephthalate, PET), polyvinylidene fluoride, or foam.

For example, a material of the first metal layer 2122 may include at least one of stainless steel, copper, titanium alloy, aluminum alloy, or silver.

In some embodiments, the first conductive layer 212 further includes a first adhesive layer 2123, and the first adhesive layer 2123 is disposed between the first dielectric layer 2121 and the first metal layer 2122, and is configured to adhere the first dielectric layer 2121 to the first metal layer 2122.

In some embodiments, the first conductive layer 212 further includes a second adhesive layer 2124, and the second adhesive layer 2124 is disposed between the display layer 211 and the first dielectric layer 2121, and is configured to adhere the first dielectric layer 2121 to the display layer 211.

For example, the material of the first adhesive layer 2123 and/or the second adhesive layer 2124 may be an optical clear adhesive (optical clear adhesive, OCA), a double-sided mesh adhesive, another conductive adhesive layer, or the like.

In some embodiments, the first conductive layer 212 may be a cushioning heat dissipation film, or may be referred to as super clean foam (super clean foam, SCF). In some other embodiments, the first conductive layer 212 may be a support plate (for example, a foldable support plate), and is configured to provide a support force for the display.

In this embodiment of this application, the display layer 211 is of the multi-layer structure (namely, the composite layer).

In an example, refer to FIG. 8. The display layer 211 may include a polarizer (polarizer, POL) 2112, a display function layer 2113, and a protective layer 2114 that are stacked. The display function layer 2113 is disposed between the polarizer 2112 and the protective layer 2114.

In some embodiments, the display 21 further includes cover glass (cover glass, CG) 2111. The cover glass 2111 is disposed on the polarizer 2112. Specifically, the polarizer 2112 is disposed between the cover glass 2111 and the display function layer 2113, and the display function layer 2113 is disposed between the polarizer 2112 and the protective layer 2114.

The cover glass 2111 mainly serves a protective function, and in some cases also provides aesthetic and decorative effects. For example, the cover glass 2111 may be 2D glass, 2.5D glass, or 3D glass, where the 2D glass is straight glass (straight glass), and the 2.5D glass and the 3D glass are curved glass (curved glass). In some cases, the cover glass 2111 may also be referred to as a glass cover.

The polarizer 2112 is configured to convert unpolarized light into polarized light, or change a polarization direction of polarized light.

The display function layer 2113 is a layer that mainly implements a display function, and may convert an electrical signal into visual information. In some embodiments, the display function layer 2113 is a screen display control panel (panel, PNL).

The protective layer 2114 mainly serves a protective function. The protective layer 2114 is configured to connect to the first conductive layer 212. In some embodiments, the protective layer 2114 may be a back film (back film, BF). For example, a material of the protective layer 2114 may be polyethylene terephthalate (polyethylene terephthalate, PET) or polyimide (polyimide, PI).

In some embodiments, the display layer 211 further includes a third adhesive layer 2115, and the third adhesive layer 2115 is disposed between the cover glass 2111 and the polarizer 2112, and is configured to adhere the cover glass 2111 to the polarizer 2112. For example, a material of the third adhesive layer 2115 may be an optical clear adhesive, a double-sided mesh adhesive, or the like.

In some embodiments, the display layer 211 further includes a fourth adhesive layer 2116, and the fourth adhesive layer 2116 is disposed between the display function layer 2113 and the protective layer 2114, and is configured to adhere the display function layer 2113 to the protective layer 2114. For example, a material of the fourth adhesive layer 2116 may be an optical clear adhesive, a double-sided mesh adhesive, a pressure sensitive adhesive (pressure sensitive adhesive, PSA), or the like.

It may be understood that a stacked structure of the display layer 211 shown in FIG. 8 is merely an example. For different types of electronic devices, stacked structures of display layers of the electronic devices are also different. Details are not described herein again.

In some embodiments, the conductive component 22 may be of the single-layer structure. For example, the connection part 221 and the abutting part 222 each include a single-layer material. For example, the connection part 221 includes a support layer, and the abutting part 222 includes a conductive layer.

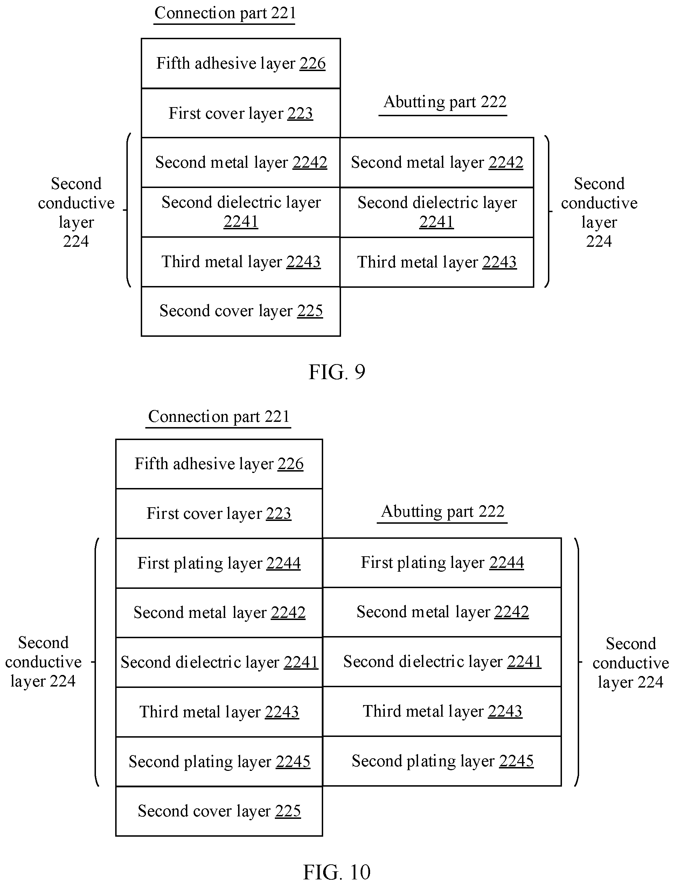

In some other embodiments, the conductive component 22 is of a stacked structure. The following provides descriptions with reference to FIG. 9 and FIG. 10.

In an example, refer to FIG. 9. Both the connection part 221 and the abutting part 222 include a second conductive layer 224, and the connection part 221 further includes a first cover layer (cover layer, CVL) 223 and a second cover layer 225 that are stacked with the second conductive layer 224. The first cover layer 223 and the second cover layer 225 are respectively disposed on two sides of the second conductive layer 224 in a thickness direction of the display. For example, the first cover layer 223 is disposed on a side that is of the second conductive layer 224 and that is close to the display 21, and the second cover layer 225 is disposed on a side that is of the second conductive layer 224 and that is close to the elastic member 23. The first cover layer 223 and the second cover layer 225 may serve a protective function or serve a covering function for subsequent surface processing. The second conductive layer 224 is configured to conduct electricity, and particularly, the second conductive layer 224 of the abutting part 222 is configured to electrically connect to the elastic member 23.

In this way, a requirement on a processing process of the conductive component 22 is low, and because a quantity of stacked layers of the abutting part 222 is less than a quantity of stacked layers of the connection part 221, the conductive component 22 is partially thinned, to make space for a working height of the elastic member 23. This helps reduce an overall device thickness, and greatly improves inner cavity utilization of the electronic device.

In some embodiments, the material of the first cover layer 223 and the second cover layer 225 is polyimide.

Similar to the first conductive layer 212, the second conductive layer 224 may be a single-layer structure or a multi-layer structure.

For example, when the second conductive layer 224 is of the single-layer structure, a material of the second conductive layer 224 may be a metal conductive material, for example, stainless steel, titanium alloy, aluminum alloy, vinylene carbonate (vinyl carbonate, VC), copper, or silver, or a non-metal conductive material, for example, carbon fiber, carbon nanotube, titanium carbide, graphene, or zinc oxide, some conductive polymer materials, a conductive ceramic material, or the like.

For another example, when the second conductive layer 224 is of the multi-layer structure, the second conductive layer 224 may include at least one metal layer. Refer to FIG. 9. The second conductive layer 224 may include a second metal layer 2242, a second dielectric layer 2241, and a third metal layer 2243 that are stacked. The second metal layer 2242 and the third metal layer 2243 are respectively disposed on two sides of the second dielectric layer 2241 in the thickness direction of the display. For example, the second metal layer 2242 is disposed on a side that is of the second dielectric layer 2241 and that is close to the display 21, and the third metal layer 2243 is disposed on a side that is of the second dielectric layer 2241 and that is close to the elastic member 23. For the connection part 221, the second metal layer 2242 is located between the second dielectric layer 2241 and the first cover layer 223, and the third metal layer 2243 is located between the second dielectric layer 2241 and the second cover layer 225. Herein, the second dielectric layer 2241 mainly serves a support function, and is configured to support the second metal layer 2242 and the third metal layer 2243.

The stacked structure design of the second conductive layer 224 can improve strength, stability, and the like of the conductive component 22 while ensuring conductivity of the conductive component 22.

In the foregoing embodiments, the second metal layer 2242 and the third metal layer 2243 may be of the single-layer structure, or may be of the multi-layer structure. This is not limited in this application. Alternatively, the second conductive layer 224 may include the second metal layer 2242 or the third metal layer 2243.

In some embodiments, as shown in FIG. 10, the second conductive layer 224 may further include a first plating layer 2244 and a second plating layer 2245. The first plating layer 2244 is disposed on a side that is of the second metal layer 2242 and that is close to the display 21, and the second plating layer 2245 is disposed on a side that is of the third metal layer 2243 and that is close to the elastic member 23. For the connection part 221, the first plating layer 2244 is disposed between the second metal layer 2242 and the first cover layer 223, and the second plating layer 2245 is disposed between the third metal layer 2243 and the second cover layer 225. The first plating layer 2244 and the second plating layer 2245 are configured to improve performance of the conductive component 22, for example, improve at least one of anti-corrosion performance, wear resistance, conductivity, or hardness.

For example, the first plating layer 2244 and/or the second plating layer 2245 may include at least one of a gold plating layer, a nickel plating layer, and a silver plating layer. The silver plating layer can improve the conductivity of the conductive component 22. The nickel plating layer can improve the anti-corrosion performance and wear resistance of the conductive component 22. The gold plating layer can improve the conductive contact impedance and improve the conductivity.

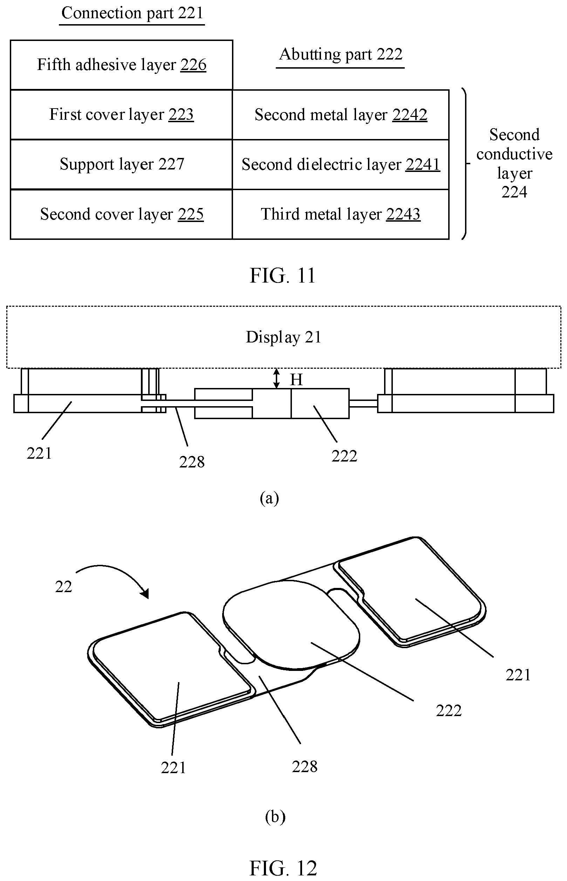

In another example, as shown in FIG. 11, the connection part 221 includes a first cover layer 223, a support layer 227, and a second cover layer 225 that are stacked. The first cover layer 223 and the second cover layer 225 are respectively disposed on two sides of the support layer 227 in the thickness direction of the display. For example, the first cover layer 223 is disposed on a side that is of the support layer 227 and that is close to the display 21, and the second cover layer 225 is disposed on a side that is of the support layer 227 and that is close to the elastic member 23. The abutting part 222 includes a second conductive layer 224.

To be specific, the stacked structure shown in FIG. 11 differs from the stacked structure shown in FIG. 9 in that the second conductive layer 224 in the connection part 221 is replaced with the support layer 227, and the metal layer is not included. This can further reduce the thickness of the conductive component 22.

Certainly, in some embodiments, the connection part 221 may include either the first cover layer 223 or the second cover layer 225, or may not include a cover layer, but include only the support layer 227.

For example, the second conductive layer 224 may include the second metal layer 2242, the second dielectric layer 2241, and the third metal layer 2243 that are stacked. The second metal layer 2242 and the third metal layer 2243 are respectively disposed on two sides of the second dielectric layer 2241 in the thickness direction of the display. For example, the second metal layer 2242 is disposed on a side that is of the second dielectric layer 2241 and that is close to the display 21, and the third metal layer 2243 is disposed on a side that is of the second dielectric layer 2241 and that is close to the elastic member 23.

In some embodiments, in the stacked structure shown in FIG. 11, the second conductive layer 224 may further include the first plating layer 2244 and the second plating layer 2245 shown in FIG. 10. The first plating layer 2244 is disposed on a side that is of the second metal layer 2242 and that is close to the display 21, and the second plating layer 2245 is disposed on a side that is of the third metal layer 2243 and that is close to the elastic member 23.

In some embodiments, a material of the second dielectric layer 2241 or the support layer 227 may include at least one of polyimide (polyimide, PI), TPU, polypropylene, PET, or polyvinylidene fluoride. The materials of the second dielectric layer 2241 and the support layer 227 may alternatively be the same or different. This is not limited in this application.

In some embodiments, the second dielectric layer 2241 and the support layer 227 are located at a same layer, or the second dielectric layer 2241 and the support layer 227 are formed integrally. For example, the material of the second dielectric layer 2241 is the same as the material of the support layer 227.

In some embodiments, as shown in FIG. 9 to FIG. 11, the connection part 221 may further include a fifth adhesive layer 226, and the fifth adhesive layer 226 is disposed on a side that is of the first cover layer 223 and that is close to the display 21, and is configured to adhere the connection part 221 to the display 21 (for example, specifically the first conductive layer 212). In some embodiments, the fifth adhesive layer 226 may also be referred to as a double-sided adhesive. For example, a material of the fifth adhesive layer 226 may be an optical clear adhesive, a double-sided mesh adhesive, an insulating foam adhesive, or the like.

FIG. 12 is a diagram of a structure of a conductive component according to an embodiment of this application.

As shown in (a) in FIG. 12, there is a gap H between a surface that is of the abutting part 222 and that faces the display 21 and a surface that is of the display 21 and that faces the abutting part 222. When the second end 232 of the elastic member 23 applies an action force to the abutting part 222, the abutting part 222 may move in a direction close to the display 21 relative to the connection part 221, finally contact the display 21, and abut against the display 21 under an action of an elastic force of the elastic member 23, to implement a reliable electrical connection between the abutting part 222 and the display 21. It may be understood that the gap H herein is formed after the conductive component 22 is assembled with the display 21. In a complete assembly state, after the elastic member 23 applies an action force to the abutting part 222, the abutting part 222 moves or deforms in the gap H in the thickness direction of the display, and the gap H may be eliminated.

To be specific, when the conductive component 22 is in an initial state (namely, a state in which the conductive component 22 is not assembled with another component), in other words, when the abutting part 222 does not abut against the second end 232, there is a preset distance between the surface that is of the abutting part 222 and that faces the display 21 and a surface that is of the connection part 221 and that faces the display 21. The preset distance is used, when the conductive component 22 is in an assembled state, for the abutting part 222 to move in the formed gap H in the thickness direction of the display under an action of an elastic force of the elastic member 23 until the abutting part 222 abuts against the display 21.

Because there is the gap H between the abutting part 222 and the display 21, an action force for abutting the abutting part 222 against the display 21 is provided only by the elastic member 23, so that controllability is good, to facilitate design of a size parameter and an elastic force of the elastic member 23. In addition, the gap H can offset errors generated in processes such as processing and assembly, to avoid causing or aggravating the mura problem. It is assumed that no gap H is disposed between the abutting part 222 and the display 21. In this case, if there is an error in processes of processing and assembling stacked layers of the conductive component 22, the surface that is of the abutting part 222 and that faces the display 21 may be closer to the display 21 than the surface that is of the connection part and that faces the display 21. In this way, after the conductive component 22 is attached to the display 21, the abutting part 222 applies a specific pressure to a part of the display 21. The pressure causes mura.

In some embodiments, as shown in (b) in FIG. 12, the conductive component 22 may include the connection part 221, the abutting part 222, and an elastic arm 228, and the elastic arm 228 is connected to the abutting part 222 and the connection part 221. The elastic arm 228 is prone to deform, so that the entire abutting part 222 can move in the direction close to the display 21 relative to the connection part 221. This helps disperse the elastic force applied by the elastic member 23 to a larger surface, and improves or avoids the mura problem.

In some embodiments, a material of the elastic arm 228 may include at least one of PI, TPU, polypropylene, PET, or polyvinylidene fluoride.

In some embodiments, the elastic arm 228, the second dielectric layer 2241 (or the support layer 227) in the connection part 221, and the second dielectric layer 2241 in the abutting part 222 are located at a same layer. In this way, the gap H and the elastic arm 228 can be implemented by using a difference between stacked structures of parts of the conductive component 22, the structure is simple, and costs are reduced.

In some embodiments, the conductive component 22 may include two connection parts 221 and an abutting part 222 disposed between the two connection parts 221. For differentiation, one of the two connection parts 221 is referred to as a first connection part, and the other is referred to as a second connection part. Therefore, two opposite ends of the abutting part 222 are respectively connected to the first connection part and the second connection part. In this way, a reliable connection between the conductive component 22 and the display 21 can be ensured.

In some embodiments, the conductive component 22 may include two elastic arms 228. For differentiation, one of the two elastic arms 228 is referred to as a first elastic arm, and the other is referred to as a second elastic arm. The first elastic arm is disposed between the first connection part and the abutting part 222, and is configured to connect the first connection part and the abutting part 222. The second elastic arm is disposed between the second connection part and the abutting part 222, and is configured to connect the second connection part and the abutting part 222. In this way, reliability of the abutting part 222 during overall movement can be ensured.

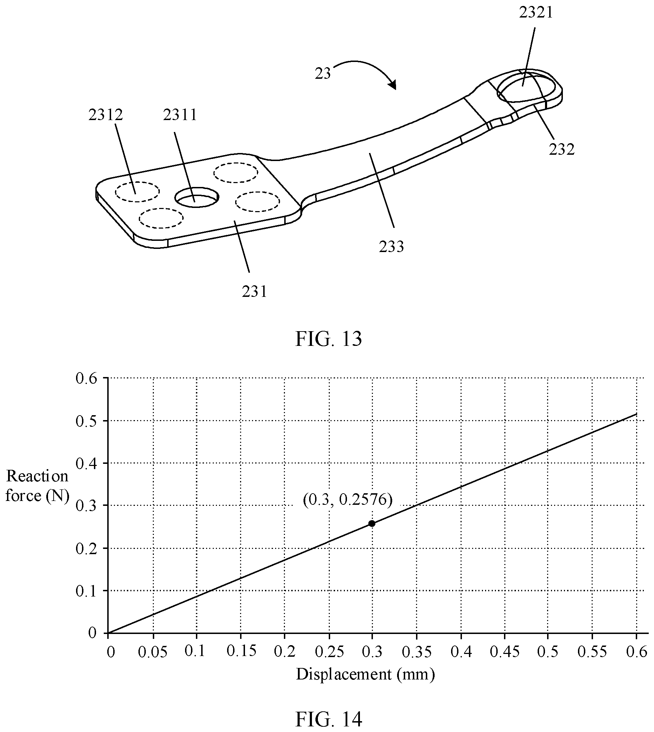

FIG. 13 is a diagram of a structure of an elastic member according to an embodiment of this application.

As shown in FIG. 13, the elastic member 23 includes the first end 231, the second end 232, and the deformation section 233. The deformation section 233 is located between the first end 231 and the second end 232, and may undergo elastic deformation. Specifically, the deformation section 233 is a bent sheet. When an external force is applied to the deformation section 233, the deformation section 233 may store and release energy through bending. For example, the deformation section 233 may be arc-shaped. In this embodiment of this application, the first end 231 is a fixed end, the second end 232 is a free end, and the deformation section 233 may undergo elastic deformation. Therefore, the elastic member 23 is designed as a single cantilever, which can ensure stability of an electrical connection.

In some embodiments, a surface that is of the second end 232 and that faces the display 21 includes an arc surface 2321, and the arc surface 2321 protrudes toward the display 21. When the second end 232 abuts against the abutting part 222, actually, the arc surface 2321 is in contact with the abutting part 222. The design of the arc surface can ensure reliability of an electrical connection between the second end 232 and the abutting part 222.

In some embodiments, the second end 232 includes at least a part of a sphere. For example, the second end 232 is spherical or hemispherical.

In some embodiments, the first end 231 includes a positioning part 2311, and the positioning part 2311 is configured to position the elastic member 23 during assembly. For example, the positioning part 2311 may be a through hole (for example, a round hole) or a protrusion (for example, a cylinder). When the positioning part 2311 is the protrusion, the protrusion is disposed on a side that is of the first end 231 and that faces the metal component 24. Correspondingly, a position on the metal component 24 corresponding to the first end 231 includes a positioning part design, for example, a hole feature (for example, a through hole or a blind hole) or a protrusion feature is correspondingly designed. When a protrusion is disposed on the metal component 24, the protrusion is disposed on a side that is of the metal component 24 and that faces the first end 231. By way of example rather than limitation, in actual application, positioning may be implemented by using a positioning hole on the first end 231 and a positioning hole on the metal component 24, or positioning may be implemented by using a protrusion on the first end 231 and a positioning hole on the metal component 24, or positioning may be implemented by using a positioning hole on the first end 231 and a protrusion on the metal component 24. A positioning manner of the elastic member 23 is not limited thereto in this application.

In some embodiments, the first end 231 includes a welding part 2312 (as shown in a region indicated by a dashed line in FIG. 13), and the welding part 2312 is welded to the metal component 24. For example, a welding area of the welding part 2312 is about 2 mm*2 mm. Compared with a 2 mm*8 mm welding area required by the conductive foam, the elastic member 23 provided in embodiments of this application may occupy a smaller area to implement welding with the metal component 24, thereby saving space and helping expand component layout space.

FIG. 14 is a diagram of an elastic force curve of the elastic member 23 according to an embodiment of this application. As shown in FIG. 14, a vertical coordinate is a reaction force generated when an action force is applied to the second end 232 of the elastic member 23, and a unit is Newton (newton), which is represented by a symbol N. A horizontal coordinate is displacement generated by the second end 232 relative to an initial position in the thickness direction of the display when the action force is applied to the second end 232 of the elastic member 23, and a unit is millimeter (millimeter), which is represented by a symbol mm.

It can be seen from the figure that, when the displacement of the elastic member 23 is in a range of 0 mm to 0.6 mm, the generated reaction force is about 0 N to 0.5 N. In actual application, a working height of the elastic member 23 may be controlled to be about 0.25 mm (for example, between 0.2 mm and 0.55 mm). Compared with the working height of 0.5 mm to 0.8 mm required by the conductive foam, a size occupied by the elastic member 23 provided in embodiments of this application in the thickness direction of the display is greatly reduced, to help reduce the overall device thickness. Correspondingly, a pushing force on a screen generated by the elastic member 23 may be controlled between 0.2 N and 0.5 N. Compared with the pushing force on the screen of more than 1 N generated by the conductive foam, the pushing force on the screen generated by the elastic member 23 provided in embodiments of this application is greatly reduced, to help improve the mura problem and reduce the delamination risk of the screen. Further, the electrical connection of the display usually requires five to eight ground points. If the display is electrically connected by using the conductive foam, to avoid screen delamination, the screen needs to be held by widening an adhesion area and an adhesive dispensing area, which causes an increase in a black border of the screen. However, if the display is electrically connected by using the elastic member 23 provided in this application, the pushing force on the screen generated by the elastic member 23 is small, which can greatly reduce the delamination risk of the screen, improve reliability of the screen, and further reduce the black border of the screen, to improve competitiveness of the entire electronic device.

In addition, the pushing force on the screen generated by the elastic member 23 is small, thereby helping design a thinner display while ensuring the reliability of the screen, for example, reduce a thickness and/or a quantity of stacked layers of the display, to implement a light and thin design of the electronic device.

Refer to FIG. 6. In some embodiments, the electronic device 200 further includes a circuit board 25, and the metal component 24 may be disposed on the circuit board 25.

In embodiments of this application, there are a plurality of types of metal components 24.

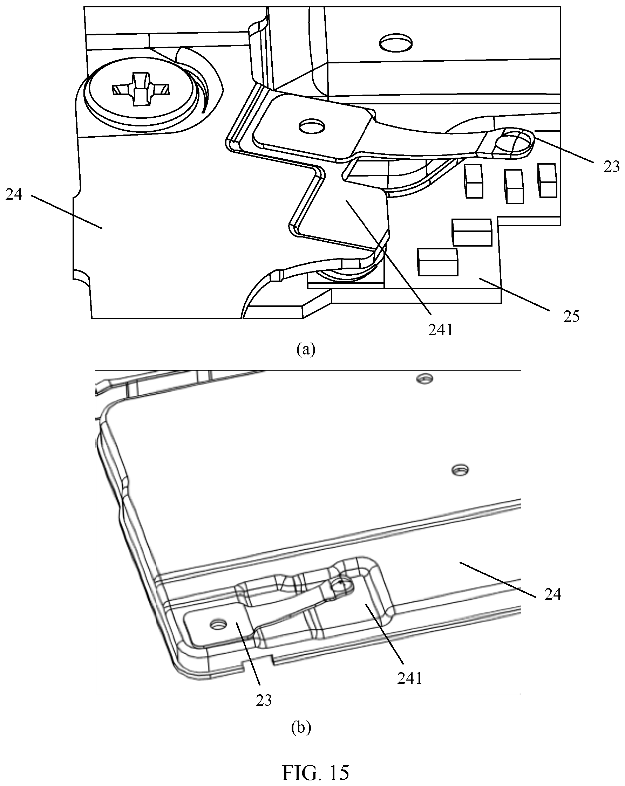

In an example, as shown in (a) in FIG. 15, the electronic device 200 may include the circuit board 25, and the metal component 24 may be a circuit board support, or referred to as a mainboard bracket.

In another example, as shown in (b) in FIG. 15, the metal component 24 may be a shielding can. The shielding can may be configured to prevent internal components of the electronic device from emitting radiation outward and protect the internal components from external radiation interference. In some embodiments, the shielding can may be disposed on the circuit board 25 and electrically connected to the circuit board 25. Because the working height required by the elastic member 23 is small, when the elastic member 23 is connected to the shielding can, mainboard layout utilization can be improved.

In another example, the metal component 24 may be a board-to-board (board-to-board, BTB) connector bracket. BTB connectors are mainly used for connections between printed circuit boards (printed circuit boards, PCBs), and can implement direct connections of power and signals of the circuit boards, thereby effectively simplifying parallel stacking PCB application. The BTB connector bracket is configured to press-fit the BTB connectors, and may also be referred to as a press-fit BTB bracket.

In another example, the metal component 24 may be a middle frame, for example, the middle frame 123 shown in FIG. 1.

In some embodiments, as shown in (a) and (b) in FIG. 15, a recess part 241 recessed away from the elastic member 23 may be disposed on a surface that is of the metal component 24 and that faces the elastic member 23, and a bottom wall of the recess part 241 is configured to connect to the first end 231 of the elastic member 23. Because the metal component 24 occupies small space, the recess part 241 is disposed on the metal component 24 to connect the elastic member 23, so that an overall device height can be reduced without affecting another component.

In some embodiments, as shown in (a) in FIG. 15, a projection of the first end 231 of the metal component 24 in the thickness direction of the display is located within a projection range of the recess part 241 in the thickness direction of the display.

In some embodiments, as shown in (b) in FIG. 15, a projection of the metal component 24 in the thickness direction of the display is located within a projection range of the recess part 241 in the thickness direction of the display.

In embodiments of this application, there are a plurality of assembly manners of the display electrical connection solution.

In an example, the elastic member 23 may be first connected (for example, welded) to the metal component 24 (for example, the shielding can or a metal bracket), and then a component (which may be referred to as an elastic component) obtained after the elastic member 23 is connected to the metal component 24 is connected (for example, welded) to the circuit board 25 (for example, the mainboard). The conductive component 22 is connected (for example, adhered by using an insulating double-sided adhesive or an insulating foam adhesive) to the display 21, and specifically, the connection part 221 of the conductive component 22 is connected to a stacked layer (for example, an SCF layer, a VC layer, or a stainless steel layer) that is of the display 21 and that is closest to the circuit board. Finally, the display 21 and the circuit board 25 are assembled together, and the second end 232 of the elastic member 23 abuts against the abutting part 222 (for example, a central region of the abutting part 222) of the conductive component 22. For example, the second end 232 abuts against the second conductive layer 224 of the abutting part 222. Because the abutting part 222 is in contact with the display 21 or has a small gap from the display, under an action of an elastic force of the elastic member 23, the second end 232 applies an action force to the abutting part 222, so that the abutting part 222 is deformed and abuts against the display 21, to form a complete electrical connection solution.

For example, this assembly manner is applicable to a reversely assembled electronic device. The reverse assembly means a manner in which an inner cavity is first installed and the display is finally installed during assembly of the electronic device.

In another example, the elastic member 23 may be first connected (for example, welded) to the metal component 24 (for example, the middle frame). The conductive component 22 is connected (for example, adhered by using an insulating double-sided adhesive or an insulating foam adhesive) to the display 21, and specifically, the connection part 221 of the conductive component 22 is connected to a stacked layer (for example, an SCF layer, a VC layer, or a stainless steel layer) that is of the display 21 and that is closest to the circuit board. Then, the display 21 connected to the conductive component 22 is assembled with the metal component 24 connected to the elastic member 23, so that the second end 232 of the elastic member 23 abuts against the abutting part 222 of the conductive component 22, for example, the second end 232 abuts against the second conductive layer 224 of the abutting part 222. Finally, the circuit board 25 is assembled with the foregoing assembled components.

For example, this assembly manner is applicable to a normally assembled electronic device. The normal assembly means a manner in which the screen and the middle frame are first assembled and the mainboard is finally installed during assembly of the electronic device.

In some embodiments, for a foldable electronic device with a cover screen, a main screen is installed in the normal assembly manner, and the cover screen is installed in the reverse assembly manner.

In some embodiments, the display 21 may be a flexible screen (that is, the screen may be bent and folded), or may be a rigid screen (that is, the screen cannot be bent or folded).

In embodiments of this application, the display 21 may include a display region and a non-display region, and the non-display region surrounds the display region. The display region is a region in which interface content can be displayed. The non-display region is a region in which the interface content is not displayed and that is usually black. For example, a cover plate (or referred to as a screen frame or a B shell) may be disposed on the display 21. A window region of the cover plate is usually the display region, and an ink layer is usually disposed on a periphery of the window region, to block the non-display region of the display 21. For another example, the display 21 may be fastened to a backplane (or referred to as an A shell). A region that is on the display 21 and that overlaps the backplane is usually the non-display region of the display 21, and a region that is on the display 21 and that does not overlap the backplane is usually the display region of the display 21.

In some embodiments, a projection of the elastic member 23 in the thickness direction of the display 21 overlaps a projection of the display region of the display 21 in the thickness direction of the display 21. For example, the projection of the elastic member 23 in the thickness direction of the display 21 is located within a range of the projection of the display region of the display 21 in the thickness direction of the display 21.

In some embodiments, a projection of the conductive component 22 in the thickness direction of the display 21 overlaps the projection of the display region of the display 21 in the thickness direction of the display 21. For example, the projection of the conductive component 22 in the thickness direction of the display 21 is located within the range of the projection of the display region of the display 21 in the thickness direction of the display 21.

The elastic member 23 and the conductive component 22 may be disposed in the display region of the display, which facilitates flexible layout of electrical connection points, and can further reduce a black border formed by the non-display region.

In some embodiments, the display electrical connection solution provided in embodiments of this application may be applied to a foldable electronic device, for example, a foldable mobile phone.

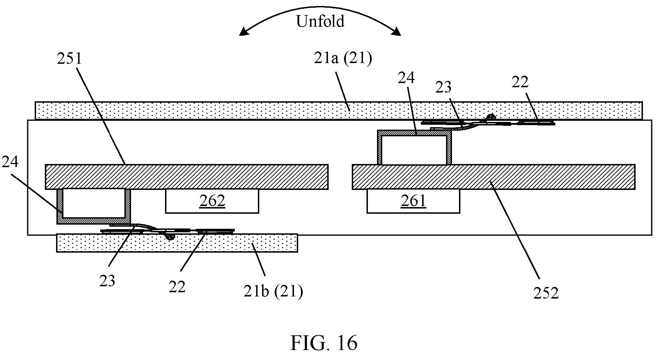

For example, the electronic device 200 may be the foldable electronic device. As shown in FIG. 16, the electronic device 200 may include two displays 21: a foldable screen 21a and a non-foldable screen 21b. The foldable screen 21a may also be referred to as a main screen, and the non-foldable screen 21b may also be referred to as a cover screen. For differentiation, in some cases, the non-foldable screen 21b is referred to as a first display, and the foldable screen 21a is referred to as a second display. The main screen 21a may be folded or unfolded along a folding axis. A display area of the cover screen 21b is less than half of a display area of the main screen 21a. The display electrical connection solution provided in embodiments of this application may be applied to the main screen 21a and the cover screen 21b. When the display electrical connection solution is applied to the cover screen 21b, the conductive component 22, the elastic member 23, and the metal component 24 are disposed between the main screen 21a and the cover screen 21b.

In some embodiments, the electronic device 200 (specifically, the circuit board 25 mentioned above) may include a first circuit board 251 and a second circuit board 252, and the first circuit board 251 and the second circuit board 252 are accommodated in accommodating space formed by a housing of the electronic device 200. The first circuit board 251 and the second circuit board 252 can rotate relative to each other around the folding axis of the electronic device 200. The first circuit board 251 is disposed between the main screen 21a and the cover screen 21b. To be specific, a projection of the first circuit board 251 in a screen thickness direction (or a thickness direction of the electronic device) overlaps both a projection of the main screen 21a in the screen thickness direction and a projection of the cover screen 21b in the screen thickness direction. A projection of the second circuit board 252 in the screen thickness direction overlaps the projection of the main screen 21a in the screen thickness direction, and does not overlap the projection of the cover screen 21b in the screen thickness direction. It may be understood that each projection herein is a projection when the flexible display is in an unfolded state.

It should be noted that, in the descriptions of thickness directions such as the "thickness direction of the display", the "screen thickness direction", and the "thickness direction of the electronic device" in embodiments of this application, when the display is the flexible display, the thickness direction is a thickness direction when the display is in the unfolded state.

In some embodiments, the electronic device 200 may further include a system on chip (system on chip, SOC) 261 and a radio frequency integrated circuit (radio frequency integrated circuit, RFIC) (also referred to as a radio frequency chip) 262. The radio frequency chip 262 is disposed on the first circuit board 251, and the system on chip 261 is disposed on the second circuit board 252.

In some embodiments, the electronic device 200 may further include a first antenna and a second antenna. The first antenna is disposed in a housing in which the radio frequency chip 262 is located, and the second antenna is disposed in a housing in which the system on chip 261 is located. In other words, the first antenna, the radio frequency chip 262, and the first circuit board 251 may be located in the accommodating space formed by the first housing 121 shown in FIG. 2, and the second antenna, the system on chip 261, and the second circuit board 252 may be located in the accommodating space formed by the second housing 122 shown in FIG. 2. Such a layout design can improve space utilization, and improve free and flexible layout and heat dissipation capability of the antenna. In addition, if the cover screen 21b is electrically connected by using the solution provided in this application, a clutter problem of the first antenna can be resolved. In addition, this layout can improve the volume ratio of the entire battery, maximize the battery capacity in ultimate space, improve the overall battery life of the electronic device, and bring better experience for mobile office.

Types of the first antenna and the second antenna are not specifically limited in this application. By way of example rather than limitation, the first antenna is a cellular antenna, and the second antenna is a short-range antenna.

In some other embodiments, the system on chip 261 and the radio frequency chip 262 may alternatively be disposed on a same circuit board, for example, the first circuit board 251 or the second circuit board 252. In this way, a communication loss between the system on chip 261 and the radio frequency chip 262 can be reduced, to meet a link loss that the system on chip 261 can tolerate.

In some other embodiments, the first antenna and/or the second antenna may be disposed on a circuit board, for example, the first circuit board 251 or the second circuit board 252, on which the system on chip 261 and the radio frequency chip 262 are located. In this way, a communication loss between the first antenna and the radio frequency chip 262 and/or a communication loss between the second antenna and the system on chip 261 can be reduced.

In some embodiments, the display electrical connection solution provided in embodiments of this application may be applied to a non-foldable electronic device, for example, a bar-type mobile phone.

For example, the electronic device 200 may be the non-foldable electronic device. For example, the electronic device 200 includes a right half part of the foldable electronic device in FIG. 16, and the electronic device 200 further includes a back cover. The back cover is disposed opposite to the display 21, the display 21 includes a glass cover, and the conductive component 22, the elastic member 23, and the metal component 24 are disposed between the back cover and the display 21.

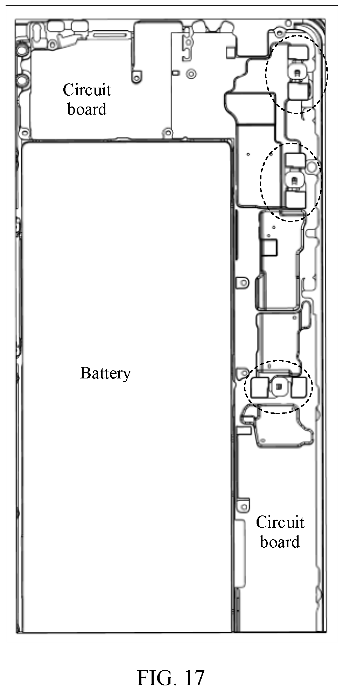

In some embodiments, electrical connection points of the display may be determined based on a quantity of antennas disposed in the electronic device 200. Generally, a larger quantity of antennas indicates a larger quantity of electrical connection points of the display. For example, five to eight electrical connection points are disposed. For example, the quantity of electrical connection points of the display is equal to the quantity of antennas. It may be understood that the elastic member 23 and the conductive component 22 are correspondingly disposed at each electrical connection point. For ease of understanding, as shown in FIG. 17, a dashed line position is an electrical connection point of the display.

In embodiments of this application, that the display is grounded and that the display is electrically connected may be understood as a same meaning, and the two may be replaced with each other. A ground is a negative electrode. In a mainboard circuit of the electronic device, grounds are the same. A copper sheet on a mainboard, a soldering point of a shielding can, a metal bracket, and a negative electrode of a battery base are all grounds.

In the descriptions of this application, it should be noted that terms "installation", "connected", and "connection" should be understood in a broad sense unless there is a clear stipulation and limitation. For example, "connection" may be a fixed connection, a detachable connection, or an integrated connection; may be a mechanical connection or an electrical connection; and may be a direct connection, an indirect connection through an intermediate medium, or a connection inside two elements. A person of ordinary skill in the art may understand specific meanings of the foregoing terms in this application based on a specific situation.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electronic device, comprising a first display (21), a conductive component (22), an elastic member (23), and a metal component (24), wherein the conductive component (22) and the elastic member (23) are disposed between the first display (21) and the metal component (24), the conductive component (22) is electrically connected to the first display (21), and the elastic member (23) is electrically connected to the metal component (24);
the conductive component (22) comprises a connection part (221) and an abutting part (222), and the connection part (221) is connected to the first display (21); and
the elastic member (23) comprises a first end (231), a second end (232), and a deformation section (233) located between the first end (231) and the second end (232), wherein the first end (231) is connected to the metal component (24), and the second end (232) abuts against the abutting part (222) under an action of an elastic force generated by the deformation section (233), to electrically connect the elastic member (23) and the conductive component (22).

2. The electronic device according to claim 1, wherein the second end (232) and the abutting part (222) are in point contact, and the abutting part (222) and the first display (21) are in surface contact.

3. The electronic device according to claim 1 or 2, wherein the first display (21) comprises a display layer (211) and a first conductive layer (212) that are stacked, the first conductive layer (212) is disposed on a side that is of the display layer (211) and that is away from a light-emitting surface, and the first conductive layer (212) is electrically connected to the conductive component (22).

4. The electronic device according to claim 3, wherein the first conductive layer (212) is of a single-layer structure or a multi-layer structure.

5. The electronic device according to claim 4, wherein the first conductive layer (212) is of the single-layer structure, and a material of the first conductive layer (212) comprises at least one of the following materials: stainless steel, titanium alloy, aluminum alloy, vinylene carbonate, copper, silver, carbon fiber, titanium carbide, carbon nanotube, graphene, or zinc oxide.

6. The electronic device according to claim 4, wherein the first conductive layer (212) is of the multi-layer structure, the first conductive layer (212) comprises a first dielectric layer (2121) and a first metal layer (2122) that are stacked, the first dielectric layer (2121) is disposed between the display layer (211) and the first metal layer (2122), and the first metal layer (2122) is electrically connected to the conductive component (22).

7. The electronic device according to claim 6, wherein a material of the first dielectric layer (2121) comprises at least one of the following materials: thermoplastic polyurethane elastomer rubber, polypropylene, polyethylene terephthalate, polyvinylidene fluoride, or foam; and/or a material of the first metal layer (2122) comprises at least one of the following materials: stainless steel, copper, titanium alloy, aluminum alloy, or silver.

8. The electronic device according to claim 6 or 7, wherein the first conductive layer (212) is a cushioning heat dissipation film.

9. The electronic device according to any one of claims 1 to 8, wherein
the connection part (221) comprises a first cover layer (223), a support layer (227), and a second cover layer (225) that are stacked, the first cover layer (223) is disposed on a side that is of the support layer (227) and that is close to the first display (21), and the second cover layer (225) is disposed on a side that is of the support layer (227) and that is close to the elastic member (23); and
the abutting part (222) comprises a second conductive layer (224), and the second conductive layer (224) is configured to electrically connect to the elastic member (23).

10. The electronic device according to claim 9, wherein the second conductive layer (224) comprises a second metal layer (2242), a second dielectric layer (2241), and a third metal layer (2243) that are stacked, the second metal layer (2242) is disposed on a side that is of the second dielectric layer (2241) and that is close to the first display (21), and the third metal layer (2243) is disposed on a side that is of the second dielectric layer (2241) and that is close to the elastic member (23).

11. The electronic device according to claim 10, wherein the second conductive layer (224) further comprises a first plating layer (2244) and a second plating layer (2245), the first plating layer (2244) is disposed on a side that is of the second metal layer (2242) and that is close to the first display (21), and the second plating layer (2245) is disposed on a side that is of the third metal layer (2243) and that is close to the elastic member (23).

12. The electronic device according to claim 10 or 11, wherein the second dielectric layer (2241) and the support layer (227) are formed integrally.

13. The electronic device according to any one of claims 9 to 12, wherein the connection part (221) further comprises an adhesive layer (226), the adhesive layer (226) is disposed on a side that is of the first cover layer (223) and that is close to the first display (21), and the adhesive layer (226) is configured to adhere the connection part (221) to the first display (21).

14. The electronic device according to any one of claims 9 to 12, wherein materials of the first cover layer (223) and the second cover layer (225) are polyimide.

15. The electronic device according to any one of claims 1 to 14, wherein when the abutting part (222) of the conductive component (22) does not abut against the second end (232), there is a preset distance between a surface that is of the abutting part (222) and that faces the first display (21) and a surface that is of the connection part (221) and that faces the first display (21), and the preset distance is used for the abutting part (222) to move within the preset distance in a thickness direction of the first display (21) under an action of an elastic force of the elastic member (23) until the abutting part (222) abuts against the first display (21).

16. The electronic device according to claim 15, wherein the conductive component (22) further comprises an elastic arm (228), and the elastic arm (228) is connected to the connection part (221) and the abutting part (222); and
a material of the elastic arm (228) comprises at least one of the following materials: polyimide, thermoplastic polyurethane elastomer rubber, polypropylene, polyethylene terephthalate, or polyvinylidene fluoride.

17. The electronic device according to any one of claims 1 to 16, wherein the first display (21) comprises a display region and a non-display region, the non-display region surrounds the display region, a projection of the elastic member (23) in a first direction is located in the display region, and the first direction is the thickness direction of the first display (21).

18. The electronic device according to any one of claims 1 to 17, wherein the electronic device further comprises a second display (21a), the second display (21a) is a flexible screen that is capable of being folded or unfolded along a folding axis, the first display (21) comprises a glass cover, the first display (21) and the second display (21a) are disposed opposite to each other, and the conductive component (22), the elastic member (23), and the metal component (24) are disposed between the first display (21) and the second display (21a).

19. The electronic device according to claim 18, wherein the electronic device further comprises a first circuit board (251) and a second circuit board (252); a projection of the first circuit board (251) in a second direction overlaps a projection of the second display (21a) in an unfolded state in the second direction, and overlaps a projection of the first display (21) in the second direction; a projection of the second circuit board (252) in the second direction overlaps the projection of the second display (21a) in the unfolded state in the second direction, and does not overlap the projection of the first display (21) in the second direction; and the second direction is a thickness direction of the electronic device;
the electronic device further comprises a system on chip (261), and a radio frequency integrated circuit (262), wherein the system on chip (261) is disposed on the second circuit board (252), and the radio frequency integrated circuit (262) is disposed on the first circuit board (251); and
the electronic device further comprises a first housing (121) and a second housing (122), the first housing (121) and the second housing (122) may rotate relative to each other along the folding axis, the first circuit board (251) is accommodated in accommodating space formed by the first housing (121), the second circuit board (252) is accommodated in accommodating space formed by the second housing (122), a first antenna is disposed in the first housing (121), and a second antenna is disposed in the second housing (122).

20. The electronic device according to any one of claims 1 to 17, wherein the electronic device further comprises a back cover, the back cover and the first display (21) are disposed opposite to each other, the first display (21) comprises a glass cover, and the conductive component (22), the elastic member (23), and the metal component (24) are disposed between the back cover and the first display (21).
